Europäisches Patentamt

European Patent Office

Office européen des brevets

(11) Veröffentlichungsnummer: **0 350 685 B1**

(12) **EUROPÄISCHE PATENTSCHRIFT**

(45) Veröffentlichungstag der Patentschrift: **10.08.94**

(21) Anmeldenummer: **89111521.4**

(22) Anmeldetag: **24.06.89**

Die Akte enthält technische Angaben, die nach dem Eingang der Anmeldung eingereicht wurden und die nicht in dieser Patentschrift enthalten sind.

(51) Int. Cl.⁵: **G02B 1/04**

(54) Rohlinge für kontaktoptische Gegenstände.

(30) Priorität: **09.07.88 DE 3823317**

(43) Veröffentlichungstag der Anmeldung:
**17.01.90 Patentblatt 90/03**

(45) Bekanntmachung des Hinweises auf die Patenterteilung:
**10.08.94 Patentblatt 94/32**

(84) Benannte Vertragsstaaten:
**AT BE CH DE ES FR GB GR IT LI LU NL SE**

(56) Entgegenhaltungen:
**EP-A- 0 184 729**
**DE-A- 3 445 093**
**GB-A- 1 035 877**
**GB-A- 2 180 243**

(73) Patentinhaber: **CIBA-GEIGY AG**
**Klybeckstrasse 141**
**CH-4002 Basel(CH)**

(72) Erfinder: **Wingler, Frank, Dr.**
**Walter-Flex-Strasse 17**
**D-5090 Leverkusen 1(DE)**
Erfinder: **Geyer, Otto-Christian, Dr.**
**Ulmenweg 9**
**D-6333 Braunfels(DE)**

EP 0 350 685 B1

**Beschreibung**

Die Erfindung betrifft Rohlinge für kontaktoptische Gegenstände, ein Verfahren zu ihrer Herstellung und ihre Verwendung.

Kontaktoptische Gegenstände im Rahmen der vorliegenden Erfindung sind bevorzugt Kontaktlinsen und Sclerallinsen.

Kontaktlinsen auf Basis von Polymeren können auf verschiedenen Wegen hergestellt werden. Bei einer technisch bedeutsamen Möglichkeit stellt man zuerst Rohlinge (Blanks oder Buttons) her, aus denen dann durch mechanische Bearbeitung die kontaktoptischen Gegenstände hergestellt werden.

In der EP-A-0 186 789 werden vernetzte Copolymere für kontaktoptische Gegenstände aus N-Vinylpyrrolidon, N-Alkyl-N-vinylcarbonamiden, Methacrylaten und gegebenenfalls weiteren Monomeren beschrieben, die in Gegenwart von wasserlöslichen Quellmitteln hergestellt werden können. Die Quellmittel werden nach der Polymerisation gegen Wasser ausgetauscht. Die Rohlinge erhält man entweder durch Polymerisation in Gußform (Seite 13, letzter Absatz) oder durch Stanzen aus Platten des Copolymers Seite 15, Zeilen 14 und 15). Nach dem Trocknen der Rohlinge werden daraus Kontaktlinsen verschiedener Dicke gedreht und poliert.

In der DE-A-3 630 186 wird ein Verfahren zur Herstellung von Kontaktlinsenrohlingen beschrieben. Die Rohlinge entstehen in gequollenem Zustand durch Polymerisation eines entsprechenden Monomerengemisches in Gußformen. Anschließend extrahiert man die gequollenen Rohlinge mit dem Quellungsmittel (z.B. Wasser oder niedere Alkohol) und trocknet sie anschließend. Die Trocknung wird vorzugsweise so durchgeführt, daß der gequollene Rohling in einen Trockenschrank gebracht wird, in dem er in einer Atmosphäre von Heißdampf oder hydrophilen Quellungsmitteln oberhalb der Glasübergangstemperatur des entsprechenden Copolymerisats, vorteilhaft im Temperaturintervall von 102 bis 180°C, gegebenenfalls in Gegenwart von Luft oder eines Inertgases, bis zur Massenkonstanz getrocknet und dann abgekühlt wird. Gegebenenfalls können die Rohlinge anschließend wiederum bis zur Massenkonstanz zu Ende getrocknet und in einen Exiccator überführt werden, wo sie über einem Trockenmittel bis zur eigentlichen Endbearbeitung zu Kontaktlinsen aufbewahrt werden (DE-A-3 630 186, Spalte 4, Zeilen 34 bis 47).

Ein Problem bei dar Herstellung von kontaktoptischen Gegenständen sind innere Spannungen in dar Polymermatrix, die sich bei der Formgebung, bei der unvollständigen Extraktion und bei der Trocknung ergeben. Die inneren Spannungen führen zu einer Inhomogenität der kontaktoptischen Gegenstände und zur Beeinträchtigung der optischen Eigenschaften. Die bekannten kontaktoptischen Gegenstände sind nicht frei von solchen Beeinträchtigungen.

Dieses Problem wird erfindungsgemäß durch ein Verfahren zur Herstellung von Rohlingen für kontaktoptische Gegenstände gelöst, bei dem man

a) N-Vinylpyrrolidon, Vinylcomonomere und Vernetzer gegebenenfalls in Gegenwart eines Lösungsmittels und eines Radikalstarters copolymerisiert,

b) aus dem entstandenen Copolymerisat ein Hydrogel durch Quellen in Wasser herstellt,

c) aus dem Hydrogel die Rohlinge formt und

d) die Rohlinge mit Wasser und/oder wäßrigen niedrigen Alkoholen extrahiert und nachfolgend trocknet, und das dadurch gekennzeichnet ist, daß man

e) die Trocknung bei ansteigenden Temperaturen im Temperaturbereich von 20° bis 170°C und abfallender relativer Luftfeuchtigkeit im Bereich von 90 % bis 5 % durchführt.

Vorzugsweise wird die Trocknung bei einem Druck von bis zu $4 \cdot 10^5$ Pa durchgeführt.

Aus den erfindungsgemäßen Rohlingen können spannungsfreie, isotrope, kontaktoptische Gegenstände hergestellt werden, bei denen keine optischen Beeinträchtigungen festgestellt werden können.

Copolymerisate aus N-Vinylpyrrolidon, Vinylcomonomeren und Vernetzern sind beispielsweise aus der EP-A-0 184 729, DE-A-3 445 093, US 4,405,849, EP-A-0 079 720 bekannt.

Vinylcomonomere können beispielweise aliphatische, cycloaliphatische, aromatische und araliphatische Methacrylsäureester, mit 1 bis 8 C-Atomen im Esterteil bevorzugt, sein. Beispiele hierfür sind Methylmethacrylat und die Butylmethacrylate. Eine weiter bevorzugte Klasse von Monomeren ist die der oben erwähnten Vinyllactame, insbesondere N-Vinylpyrrolidon.

Beispiele für weitere an sich bekannte Monomere sind allgemein die $C_1$-$C_{12}$-Alkyl- oder Cycloalkylester der Acrylsäure oder Methacrylsäure; Methacrylsäure; Acrylsäure; Monohydroxy- oder Dihydroxy-$C_1$-$C_6$-alkylester der (Meth)-acrylsäure sowie deren Alkylether wie z.B. 2-Hydroxyethylmethacrylat, 2-Hydroxyethylacrylat, 2,3-Dihydroxypropylmethacrylat, 1,4-Butandiol-monoacrylat, 2-Ethoxyethyl-methacrylat; Glycidylmethacrylat; Vinylacetat, Vinyllaurat, Vinylpropionat, Vinylversat, sowie Methacrylsäure-2-oxyethylethylester.

Vernetzer können beispielsweise A) (Meth)acrylester-Vernetzer und/oder B) Vinyl- oder Allyl-Vernetzer sein. Die Vernetzer sind an sich bekannte Verbindungen, welche neben einer (Meth)acrylestergruppe noch mindestens eine weitere gleiche oder verschiedene olefinisch ungesättigte Gruppe aufweisen. Hierzu gehören Acrylsäure- oder Methacrylsäureester von mehrfunktionellen Alkoholen, wie z.B. Ethylenglykoldimethacrylat, Propylenglykoldimethacrylat, Diethylenglykoldimethacrylat, Triethylenglykol-dimethacrylat, Polyethylenglykoldimethacrylat, 1,4-Butandiol-dimethacrylat, 1,6-Hexandiol-dimethacrylat, Trimethylolpropantrimethacrylat, Pentaerythrittri- und tetramethacrylat, Methyl-1,5-pentandioldimethacrylat, Dihydrodicyclopentadienylmonomethacrylat, Allylmethacrylat, Vinylmethacrylat, Bisphenol-A-dimethacrylat, sowie die entsprechenden Acrylsäureester.

Die Vernetzer B) weisen mindestens zwei olefinisch ungesättigte Gruppen (Vinyl- oder Allylgruppen), jedoch keine (Meth)acrylethergruppierungen auf. Beispiele für solche, an sich bekannte, Monomere sind Butandiol-divinylether, Divinylethylenharnstoff, Divinylpropylenharnstoff, Divinyladipat, Divinylbenzol, Divinylphthalat, Triallylcyanurat, Triallylisocyanurat, Diethylenglykol-diallylcarbonat, Diallylmaleat, Diallylitaconat, Trimethylolpropan-di- und Triallylether, Triallyltrimellitat, N,N-Diallylmelamine, etc.

Lösungsmittel können beispielsweise Alkohole wie Methanol, Ethanol, Glykol, Glykol-monoethyl-ether, Glycerin, Polyether wie z.B. Diethylenglykoldimethylether, Dimethylformamid, Dimethylsulfoxid, Methylpyrrolidon u.v.a. sein.

Radikalstarter kann beispielsweise Licht in Kombination mit Fotoinitiatoren wie beispielsweise 2,2-Dimethoxy-2-phenylacetophenon, Diethoxyacetophenon, 1-Hydroxycyclohexyl-phenylketon oder Benzoinpropyl- oder isobutyl-ether sein (J. Radiat. Curing 14 (1987), 3, Seiten 6 bis 16 und J. Radiat. Curing 14 (1987), 3, Seiten 18 bis 31). Es ist auch möglich, thermisch Radikale liefernde Substanzen wie Peroxide und Azoverbindungen, wie tert.-Butylperpivalat, Dilauroylperoxid, Diisopropylperoxidicarbonat, Benzoylperoxid, Azodiisobuttersäuredinitril einzusetzen (Houben-Weyl, Methoden der organischen Chemie, 4. Aufl., E 20, Seiten 1 bis 74).

Erfindungsgemäß führt man bevorzugt die Polymerisation bis zu einem Umsatz von mindestens 84 %, zu bevorzugt 90 %, durch. Zur Umsatzbestimmung wird eine Probe mit Ethanol im Soxhlet erschöpfend extrahiert, bei 120°C getrocknet und zurückgewogen.

Die Polymerisation wird im allgemeinen im Temperaturbereich von 25 bis 120°C durchgeführt. Die Polymerisationszeiten betragen im allgemeinen 30 Minuten bis 3 Tage.

Die Polymerisation wird im allgemeinen als Blockpolymerisation durchgeführt.

Zur Herstellung des Hydrogels werden die Copolymerisate in Wasser der Temperatur von 0 bis 80°C, bevorzugt 25 bis 50°C bis zur Gleichgewichtswasseraufnahme gequollen. Dies kann je nach Schichtdicke des Blockes 1 bis 7 Tage in Anspruch nehmen. Die Hydrogele enthalten dann im allgemeinen 55 bis 80 Gew.-% Wasser.

Die Hydrogelbildung erfolgt bevorzugt in destilliertem oder entionisiertem Wasser.

Man wechselt das Wasser bei der Hydrogelbildung häufig oder erneuert es ständig im Durchfluß.

Die Hydrogele sind in einem weichen Zustand.

Die Formgebung am Hydrogel kann durch Schneiden oder Stanzen mit scharfen Schneidewerkzeugen zu zylindrischen Rohlingen erfolgen. Die Rohlinge haben beispielsweise einen Durchmesser von 14 bis etwa 30 mm und eine Dicke von 6 bis etwa 20 mm.

Die nachfolgende Extraktion der Rohlinge kann mit Wasser und/oder niedrigen Alkoholen (Methanol oder Ethanol) erfolgen.

Die Rohlinge werden im allgemeinen im Temperaturbereich von 20 bis 80°C, bevorzugt 25 bis 50°C, extrahiert.

Bevorzugt erfolgt die Extraktion durch Wasser, das kontinuierlich oder diskontinuierlich erneuert wird.

Die Extraktion führt man so lange durch, bis der Anteil von mit reinem Ethanol extrahierbare Bestandteile weniger als 0,1 Gew.-%, bezogen auf das Hydrogel, beträgt.

Im letzten Verfahrensschritt werden die Hydrogelrohlinge wieder getrocknet. Die Trocknung wird vorzugsweise zunächst bei relativen Luftfeuchten von 90 bis 80 %, bei Temperaturen von 20 bis 90°C, entsprechenden Taupunkten von 16,4°C bis 87,2°C durchgeführt, bis der Wassergehalt auf 10 bis 20 Gew.-% abgesunken ist. Daraufhin wird die relative Luftfeuchte auf 50 % bis 5 % und die Temperatur von 90 bis 170°C, bei den Taupunkten von 25 bis 98°C verändert; hierbei können Überdrücke bis zu $4.10^5$ Pa angewandt werden.

Die Trocknungszeiten sind von der Diffusionsgeschwindigkeit des Wassers in dem Material und damit auch von der Dicke der Rohlinge abhängig. Sie beträgt insgesamt für den Trocknungsprozeß bis zu 6 Tage.

Die erfindungsgemäßen Rohlinge haben einen isotropen Aufbau mit äußerst gleichmäßiger Netzwerkstruktur. Die Materialeigenschaften sind in allen Raumrichtungen gleich. Die Rohlinge enthalten eine über alle Richtungen verteilte Restfeuchte von etwa 0,1 bis 2 Gew.-%, bevorzugt 0,5 bis 1 Gew.-%.

Die erfindungsgemäß herstellbaren Rohlinge werden bevorzugt zur Herstellung von Kontaktlinsen verwendet.

Es ist überraschend, daß die Wasserquellung und die anschließende Trocknung unter den erfindungsgemäßen Bedingungen zu keiner Schädigung der Gelstruktur führt, sondern zu einer Stabilisierung. Es ist auch überraschend, daß durch die Formung der Rohlinge im Hydrogelzustand keine Spannungen auftreten.

Die erfindungsgemäßen Rohlinge zeichnen sich durch eine ausgezeichnete Verarbeitbarkeit auf Dreh- und Poliermaschinen aus, insbesondere bei der Fertigung bei ultradünnen Linsen mit Mittendicken im trocknen Zustand von 0,02 bis 0,03 mm. Die Überführung von Linsen (Gewichts- und Dimensionsänderung) durch Wasserquellung zu Weich-Hydrogel-Linsen verläuft bei den erfindungsgemäßen Rohlingen äußerst gleichmäßig und reproduzierbar in alle Raumrichtungen. Die Rohlinge zeichnen sich durch eine gleichmäßige Netzwerkstruktur ohne Anisotropien aus. Man beobachtet daher an den Linsen auch nach längerem Tragen eine ausgezeichnete Form- und Radien-Stabilität.

Die erfindungsgemäßen Rohlinge erfüllen die Erfordernisse für medizinische Anwendungen und können ohne weitere Reinigung eingesetzt werden.

Beispiele:

Monomermischungen der in der nachstehenden Tabelle 1 aufgeführten Zusammensetzung wurden in Glasplattenkammern der Abmessungen 250 x 250 x 6 mm, versehen mit einer Dichtschnur, unter $N_2$ nach sorgfältigem Entgasen im Vakuum gefüllt und 6 Tage mit einer UV-Fluoreszenzlampe bestrahlt. Die Platten wurden 24 Stunden bei 80°C und danach 2 Stunden bei 140°C getempert. Die Glasplattenkammern wurden geöffnet und die Polymerblöcke vom Glas gelöst. Die Polymerblöcke wurden im durchströmten, von Salzen durch Ionenaustauscher befreitem Wasser von 40°C vier Tage lang gequollen. Man erhielt Hydrogele. Aus den Gelen wurden mit einem Locheisen Rohlinge vom Durchmesser 22 cm gestochen und diese weitere 4 Tage in durchströmtem Ionenaustausschwasser von 40°C behandelt. Zur Probe wurde je ein Rohling hiernach drei Tage bei Raumtemperatur und anschließend 24 Stunden bei 126°C getrocknet. Der gewogene Rohling wurde drei Tage in einem Soxhlet mit Ethanol extrahiert, bei 100°C und 25 Stunden zurückgetrocknet und gewogen. Der Rohling hatte jeweils weniger als 0,05 % seines Gewichtes verloren. Die restlichen Rohlinge wurden wie folgt aufgearbeitet:
Trocknung in einem Klimaschrank mit dem folgenden Temperatur-rel.-Feuchtigkeitsprofil:

| Weg A: | | | |
|---|---|---|---|
| Zeit, Stdn. | Temperatur °C | rel. Luftfeuchtigkeit % | Taupunkt °C |
| 12 | 80 | 90 | 77,4 |
| 6 | 80 | 80 | 74,6 |
| 6 | 80 | 70 | 71,4 |
| 6 | 80 | 50 | 63,8 |
| 12 | 90 | 40 | 67,6 |
| 0,5 | 165 | < 10 | 98,0 |
| 24 | 126 | 50 | 98,0 |

Je ein so aufgearbeiteter Rohling aus den Rezepturen A bis E wurde zweiseitig senkrecht zu den Stirnflächen angeschliffen und poliert. Im polarisierten Licht (Durchlicht) zeigte sich die Spannungsfreiheit.

| Weg B: | | | |
|---|---|---|---|
| Zeit, Stdn. | Temperatur °C | rel. Luftfeuchtigkeit % | Taupunkt °C |
| 72 | 40 | 80 | 35,9 |
| 24 | 80 | < 10 | 25 |
| 0,5 | 165 | < 10 | 98 |
| 72 | 50 | 50 | 15 |

Die Rohlinge wurden nach dieser Behandlung in ein Bombenrohr gebracht, das verschlossen und zum Ausgleich der Feuchtigkeit in dem Rohlingen 24 Stunden bei 126°C und $4.10^5$ Pa (4 bar) Eigendruck gehalten wurde. Je ein so aufgearbeiteter Rohling aus den Rezepturen A bis E wurde zweiseitig senkecht zu den Stirnflächen angeschliffen und poliert. Im polarisierten Licht zeigte sich die Spannungsfreiheit. Die Restfeuchte betrug [2,5] %.

<u>Tabelle 1</u>

| Zusammensetzung in Gew.-% | A | B | C | D | E |
|---|---|---|---|---|---|
| N-Vinylpyrrolidon | 55 | 55 | 50 | 55 | 60 |
| N-Methyl-vinylacetamid | 5 | 10 | 10 | 5 | 5 |
| Methylmethacrylat | 39,99 | 33,99 | 33,99 | 33,99 | 33,99 |
| 2-Hydroxyethylmethacrylat | - | - | 5 | - | - |
| Methacrylsäure-2-oxyethyl-ethylester | - | - | - | 5 | - |
| Ethylenglykol-dimethacrylat | 0,5 | 0,5 | 0,5 | 0,5 | 0,5 |
| Triallylcyanurat | 0,5 | 0,5 | - | 0,5 | 0,5 |
| Divinyladipat | - | - | 0,5 | - | - |
| Azodiisobuttersäuredinitril | 0,01 | 0,01 | 0,01 | 0,01 | 0,01 |
| Wasseraufnahmevermögen, bezogen auf hydratisierten Zustand (Gew.-%) | 54 | 62 | 68 | 56 | 62 |

**Patentansprüche**

1. Verfahren zur Herstellung von Rohlingen für kontaktoptische Gegenstände, bei dem man

a) N-Vinylpyrrolidon, Vinylcomonomere und Vernetzer gegebenenfalls in Gegenwart eines Lösungsmittels und eines Radikalstarters copolymerisiert,

b) aus dem entstandenen Copolymerisat ein Hydrogel durch Quellen in Wasser herstellt,

c) aus dem Hydrogel die Rohlinge formt und

d) die Rohlinge mit Wasser und/oder wäßrigen niedrigen Alkoholen extrahiert und nachfolgend trocknet,

dadurch gekennzeichnet, daß man

e) die Trocknung bei ansteigenden Temperaturen im Temperaturbereich von 20° bis 170°C und abfallender relativer Luftfeuchtigkeit im Bereich von 90 % bis 5 % durchführt.

2. Verfahren nach Anspruch 1, dadurch gekennzeichnet, daß man die Trocknung bei einem Druck von bis zu $4.10^5$ Pa durchführt.

3. Verfahren nach Anspruch 1 oder 2, dadurch gekennzeichnet, daß die Copolymerisation bis zu einem Umsatz von mindestens 84 Gew.-% durchgeführt wird.

4. Verfahren nach einem der Ansprüche 1 bis 3, dadurch gekennzeichnet, daß die Herstellung des Hydrogels im Temperaturbereich von 0 bis 80°C erfolgt.

5. Verfahren nach einem der Ansprüche 1 bis 4, dadurch gekennzeichnet, daß die Formgebung durch Schneiden oder Stanzen des Hydrogels erfolgt.

6. Verfahren nach einem der Ansprüche 1 bis 5, dadurch gekennzeichnet, daß die Extraktion im Temperaturbereich von 20 bis 80°C vorgenommen wird.

7. Verfahren nach einem der Ansprüche 1 bis 6, dadurch gekennzeichnet, daß die Extraktion bis zu einem Anteil von extrahierbaren Bestandteilen von weniger als 0,1 Gew.-%, bezogen auf das Hydrogel, durchgeführt wird.

8. Verfahren nach einem der Ansprüche 1 bis 7, dadurch gekennzeichnet, daß die Trocknung bis zu einem Wassergehalt von 0,1 bis 5 Gew.-%, bevorzugt 1 bis 3 Gew.-%, durchgeführt wird.

9. Verfahren nach einem der Ansprüche 2 bis 8, dadurch gekennzeichnet, daß die Trocknung zunächst bei relativen Luftfeuchten von 90 bis 80 %, bei Temperaturen im Bereich von 20 bis 90°C und Taupunkten von 16,4° bis 87,2°C bis zu einem Wassergehalt von 10 bis 20 Gew.-% und dann bei einer relativen Luftfeuchte von 50 bis 5 %, bei Temperaturen im Bereich von 90 bis 170°C und Taupunkten von 16,4°C bis 98°C und bei einem Druck von bis zu $4.10^5$ Pa durchgeführt wird.

10. Verwendung der gemäß einem der Ansprüche 1 bis 9 herstellbaren Rohlinge zur Herstellung von Kontaktlinsen.

**Claims**

1. A method of manufacturing blanks for contact optical articles, wherein

a) N-vinylpyrrolidone, vinyl comonomers and cross-linking agents are copolymerised, where appropriate in the presence of a solvent and a radical initiator,

b) a hydrogel is produced from the resulting copolymer by swelling in water,

c) the blanks are shaped from the hydrogel and

d) the blanks are extracted with water and/or aqueous lower alcohols and then dried,

in which method

e) the drying operation is carried out at increasing temperatures in the temperature range of from 20° to 170°C and at decreasing relative humidity in the range of from 90 % to 5 %.

2. A method according to claim 1, wherein the drying operation is carried out at a pressure of up to $4.10^5$ Pa.

3. A method according to claim 1 or claim 2, wherein the copolymerisation is carried out until there has been a conversion of at least 84 % by weight.

6

EP 0 350 685 B1

4. A method according to any one of claims 1 to 3, wherein the production of the hydrogel is carried out in a temperature range of from 0 to 80°C.

5. A method according to any one of claims 1 to 4, wherein the shaping is carried out by cutting or stamping the hydrogel.

6. A method according to any one of claims 1 to 5, wherein the extraction is carried out in a temperature range of from 20 to 80°C.

7. A method according to any one of claims 1 to 6, wherein the extraction is carried out until the proportion of extractable constituents is less than 0.1 % by weight, based on the hydrogel.

8. A method according to any one of claims 1 to 7, wherein the drying operation is carried out until the water content is from 0.1 to 5 % by weight, preferably from 1 to 3 % by weight.

9. A method according to any one of claims 2 to 8, wherein the drying operation is carried out first at relative humidities of from 90 to 80 %, at temperatures in the range of from 20 to 90°C and dew points of from 16.4° to 87.2°C until the water content is from 10 to 20 % by weight and then at a relative humidity of from 50 to 5 %, at temperatures in the range of from 90 to 170°C and dew points of from 16.4°C to 98°C and at a pressure of up to $4.10^5$ Pa.

10. The use of the blanks producible in accordance with any one of claims 1 to 9 in the manufacture of contact lenses.

**Revendications**

1. Procédé pour la préparation d'ébauches pour éléments d'optique de contact, dans lequel on
   a) copolymérise de la N-vinylpyrrolidone, des comonomères de vinyle et des agents de réticulation, éventuellement en présence d'un solvant et d'un initiateur de radicaux libres,
   b) prépare à partir du copolymère formé un hydrogel par gonflement dans l'eau,
   c) forme les ébauches à partir de l'hydrogel et
   d) extrait les ébauches avec de l'eau et/ou des alcools inférieurs en solution aqueuse et ensuite on sèche,
   caractérisé en ce qu'on
   e) effectue le séchage à des températures croissantes dans l'intervalle de températures de 20° à 170°C et pour une humidité relative décroissante dans l'intervalle de 90 % à 5 %.

2. Procédé selon la revendication 1, caractérisé en ce qu'on effectue le séchage sous une pression allant jusqu'à $4.10^5$ Pa.

3. Procédé selon l'une des revendications 1 ou 2, caractérisé en ce qu'on effectue la copolymérisation jusqu'à une conversion d'au moins 84 % en poids.

4. Procédé selon l'une quelconque des revendications 1 à 3, caractérisé en ce que la préparation de l'hydrogel s'effectue dans l'intervalle de températures de 0 à 80°C.

5. Procédé selon l'une quelconque des revendications 1 à 4, caractérisé en ce qu'on effectue le façonnage par découpe ou estampage.

6. Procédé selon l'une quelconque des revendications 1 à 5, caractérisé en ce que l'extraction est effectuée dans l'intervalle de températures de 20 à 80°C.

7. Procédé selon l'une quelconque des revendications 1 à 6, caractérisé en ce que l'extraction est effectuée jusqu'à une proportion de constituants extractibles de moins de 0,1 % en poids, par rapport à l'hydrogel.

8. Procédé selon l'une quelconque des revendications 1 à 7, caractérisé en ce le séchage est effectué jusqu'à une teneur en eau de 0,1 à 5 % en poids, de préférence de 1 à 3 % en poids.

7

9. Procédé selon l'une quelconque des revendications 2 à 8, caractérisé en ce qu'on effectue le séchage d'abord à des humidités d'air relatives de 90 à 80 %, à des températures de 20 à 90°C et des points de rosée de 16,4°C à 87,2°C, jusqu'à ce que la teneur en eau soit entre 10 et 20 % en poids et ensuite à une humidité relative de l'air de 50 à 5 %, à des températures de 90 à 170°C et des points de rosée de 16,4°C à 98°C et sous une pression allant jusqu'à $4.10^5$ Pa.

10. Utilisation des ébauches qui peuvent être préparées selon l'une quelconque des revendications 1 à 9 pour la production de lentilles de contact.